# EUROPÄISCHE PATENTSCHRIFT

(11) **EP 0 659 303 B1**
(45) Veröffentlichungstag und Bekanntmachung des Hinweises auf die Patenterteilung: **04.09.1996**
(21) Anmeldenummer: 93912632.2
(22) Anmeldetag: 23.06.1993
(51) Int. Cl.: H02H 7/08

(54) **THYRISTORSTEUERSATZ MIT ÜBERSTROMAUSLÖSER**
THYRISTOR CONTROL SET WITH OVERCURRENT CIRCUIT-BREAKER
ELEMENT DE DECLENCHEMENT POUR THYRISTOR AVEC DISJONCTEUR DE SURINTENSITE

(30) Priorität: 09.09.1992 DE 4230544
(43) Veröffentlichungstag der Anmeldung: 28.06.1995
(73) Patentinhaber: SIEMENS AKTIENGESELLSCHAFT, 80333 München (DE)
(72) Erfinder: ADAM, Bernd, D-13469 Berlin (DE); HOCHGRÄF, Holger, D-13599 Berlin (DE)
(86) Internationale Anmeldenummer: DE9300566
(87) Internationale Veröffentlichungsnummer: WO9406187

(56) Entgegenhaltungen:
- DE-A- 2 038 907
- GB-A- 2 181 599

## Beschreibung

Die Erfindung betrifft einen Thyristorsteuersatz zur Stromversorgung und Stromregelung von elektrischen Verbrauchern, insbesondere von Elektromotoren, mit von einem Überstromauslöser erzeugbaren Schaltsignal zur Steuerung eines Leistungsschalters.

Bekannte Thyristorsteuersätze mit der eingangs definierten Anwendung schützen die elektrischen Verbraucher u. a. vor hohen Netzrückspeisungsströmen dadurch, daß die zwischen dem Versorgungsnetz und den elektrischen Verbrauchern angeordneten Leistungsschalter bei unzulässig hoch ansteigenden Überströmen angesteuert und die Verbraucher vom Netz abgeschaltet werden. Die Leistungsschalter und die Thyristoren werden dabei im Zustand elektrischer Vollbelastung geschaltet und sind dementsprechend gefährdet.
Die der Erfindung zugrundeliegende Aufgabe besteht darin, einen Thyristorsteuersatz für die eingangs definierte Anwendung zu realisieren, der diesen elektrischen Belastungen ausschließlich im thermischen zulässigen Bereich ausgesetzt ist.
Erfindungsgemäß wird dies dadurch erreicht, daß das vom Überstromauslöser erzeugbare Schaltsignal zu einer die Absteuerung des Thyristors bewirkenden Zeitschalteeinrichtung umschaltbar ist, die mit einem dem Schaltsignal nach definierter Verzögerungszeit folgenden zweiten Schaltsignal die Steuerung des Leistungsschalters bewirkt.

Mit dem Einsatz der Zeitschalteeinrichtung können die Schaltvorgänge des Thyristors und des Leistungsschalters zeitdefiniert so versetzt gesteuert werden, daß störende Strombelastungen weitgehend ausgeschlossen sind.

Eine vorteilhafte Ausgestaltung der Erfindung sieht vor, daß die definierte Zeitverzögerung der Zeitschalteeinrichtung im Bereich von 200ms einstellbar ist, so daß mit der Abschaltung des Thyristors gewöhnlich im Zeitbereich von 50 bis 100ms das anschließende Betätigen der Leistungsschalter im annähernd stromlosen Schaltzustand erfolgt.

Eine weitere vorteilhafte Ausgestaltung der Erfindung sieht vor, daß die Zeitschalteeinrichtung (ZS) integraler Bestandteil des Leistungsschalters (LS) ist.

Die Erfindung wird durch ein figurlich dargestelltes Ausführungsbeispiel näher erläutert, in dem die einzelnen Schalt- und Steuereinrichtungen durch Funktionssymbole abgebildet sind. Die elektrischen Verbraucher EV, insbesondere Elektromotoren M, werden über einen Thyristorsteuersatz SS und einen Leistungsschalter LS an das Versorgungsnetz VN angeschlossen. Der Leistungsschalter LS enthält einen nicht dargestellten Überstromauslöser, der das Schaltsignal ES erzeugt. Das erzeugbare Schaltsignal BS wird der Zeitschalteeinrichtung ZS zugeführt, und bewirkt in dem Thyristorsteuersatz SS die direkte Absteuerung des Thyristors. Die Zeitschalteeinrichtung ZS erzeugt nach einer definierten Verzögerungszeit ein zweites Schaltsignal WS, daß den Leistungsschalter LS ansteuert und damit den elektrischen Verbraucher EV vom Versorgungsnetz VN abtrennt. Die Ansteuerung des Leistungsschalters LS erfolgt also nach der Absteuerung des Thyristors in dem Thyristorsteuersatz SS, so daß der Stromwert während des Schaltens des Leistungsschalters LS annähernd den Wert NULL erreicht hat.

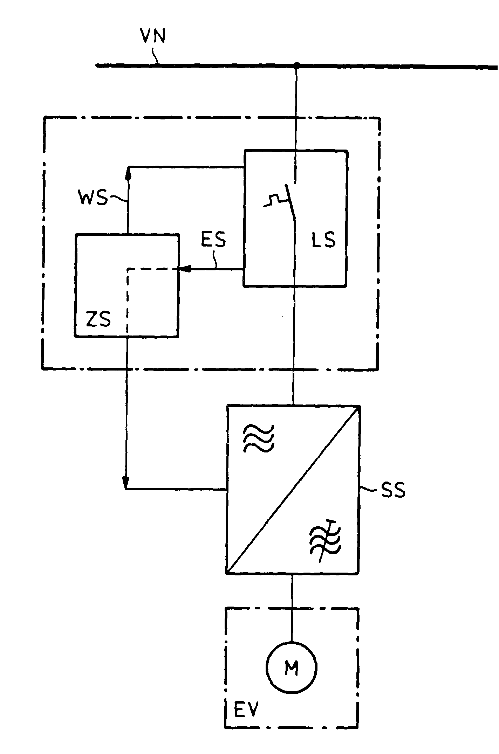

## Patentansprüche

1. Thyristorsteuersatz zur stromversorgung und Stromregelung von elektrischen Verbrauchern (EV), insbesondere von Elektromotoren, mit von einem Überstromauslöser erzeugbaren Schaltsignal (ES) zur Steuerung eines Leistungsschalters (LS),
**dadurch gekennzeichnet**,
daß das vom Überstromauslöser erzeugbare Schaltsignal (ES) zu einer die Absteuerung des Thyristors bewirkenden Zeitschalteeinrichtung (ZS) umschaltbar ist, die mit einem dem Schaltsignal (ES) nach definierter Verzögerungszeit folgenden zweiten Schaltsignal (WS) die Steuerung des Leistungsschalters (LS) bewirkt.

2. Thyristorsteuersatz nach Anspruch 1,
**dadurch gekennzeichnet**,
daß die definierte Verzögerungszeit der Zeitschalteeinrichtung (ZS) im Bereich um 200ms einstellbar ist.

3. Thyristorsteuersatz nach Anspruch 1 und 2,
**dadurch gekennzeichnet**,
daß die Zeitschalteeinrichtung (ZS) integraler Bestandteil des Leistungsschalters (LS) ist.

## Claims

1. Thyristor control unit for the power supply and power regulation of electrical loads (EV), in particular of electric motors, with a switching signal (ES) which can be generated by an overcurrent release and is used to control a circuit-breaker (LS), characterized in that the switching signal (ES) which can be generated by the overcurrent release can be switched over to a time switching device (ZS) which effects the turning-off of the thyristor and effects the control of the circuit-breaker (LS) with a second switching signal (WS) which follows the switching signal (ES) after a defined delay time.

2. Thyristor control unit according to Claim 1, characterized in that the defined delay time of the time switching device (ZS) can be set in the region around 200 ms.

3. Thyristor control unit according to Claim 1 and 2, characterized in that the time switching device (ZS) is an integral part of the circuit-breaker (LS).

## Revendications

1. Élément de commande d'un thyristor destiné à l'alimentation en courant et à la régulation du courant d'appareils (EV) consommant de l'énergie électrique, notamment de moteurs électriques, par un signal (ES) de commutation pouvant être produit par un déclencheur de surintensité et destiné à la commande d'un disjoncteur (LS),
caractérisé en ce que
le signal (ES) de commutation pouvant être produit par le déclencheur de surintensité peut être commuté sur un dispositif (ZS) de commutation temporelle, qui provoque l'extinction du thyristor et qui provoque, par un second signal (WS) de commutation suivant le signal (ES) de commutation après un retard défini, la commande du disjoncteur (LS).

2. Élément de commande de thyristor suivant la revendication 1,
caractérisé en ce que
le retard défini du dispositif (ZS) de commutation temporelle peut être réglé dans un intervalle autour de 200 ms.

3. Élément de commande de thyristor suivant les revendications 1 et 2,
caractérisé en ce que
le dispositif (ZS) de commutation temporelle fait partie intégrante du disjoncteur (LS).
